# EUROPEAN PATENT APPLICATION

(11) **EP 4 704 234 A1**
(43) Date of publication of application: **04.03.2026**
(21) Application number: 25157614.6
(22) Date of filing: 13.02.2025
(51) Int. Cl.: H01M 50/242, H01M 50/227, H01M 50/24, H01M 50/30, H01M 50/35

(54) **BATTERY PACK, ASSEMBLY METHOD THEREOF AND VEHICLE**

(30) Priority: 28.08.2024 CN 202411196624
(71) Applicant: Xiaomi EV Technology Co., Ltd., 100176 Beijing (CN)
(72) Inventor: ZHANG, Shangfu, Beijing, 100176 (CN)
(74) Representative: Stöckeler, Ferdinand

(57) **Abstract**

A battery pack (100) includes a battery tray (10), an air-discharge structure (20), potting adhesive (30) and a battery module (40), and the battery tray (10) has an accommodating space (11); the battery module (40) is installed in the accommodating space (11); at least part of the air-discharge structure (20) is positioned in the accommodating space (11) for absorbing air in the accommodating space and discharging the air in the accommodating space (11) to the outside of the battery pack (100); and the potting adhesive (30) is provided in the accommodating space and encapsulates the battery module (40) and at least part of the air-discharge structure (20). The air-discharge structure (20) is installed in the accommodating space (11), and at least part of the air-discharge structure (20) is covered by potting adhesive (30).

## Description

### FIELD

The present invention relates to the technical field of batteries, in particular to a battery pack, an assembly method thereof and a vehicle.

### BACKGROUND

A battery pack is a device used to provide energy for an electrical apparatus (such as a vehicle), and is a core component of the electrical apparatus, and with the continuous development of vehicles, the design requirements for structural strength and performance of the battery pack are getting higher and higher, requiring battery pack to have better mechanical properties. However, the mechanical properties of the battery pack provided by the related arts are reduced, and the requirements for the mechanical properties of the battery pack cannot be well met.

### SUMMARY

The purpose of the present invention is to provide a battery pack, an assembly method thereof, and a vehicle, so as to at least partially solve the technical problems existing in the related art.

To achieve the above purpose, according to a first aspect of the present invention, there is provided a battery pack, the battery pack includes a battery tray, an air-discharge structure, potting adhesive and a battery module; and the battery tray has an accommodating space, and the battery module is installed in the accommodating space; the potting adhesive is provided in the accommodating space and encapsulates the battery module; at least part of the air-discharge structure is in the accommodation space, and at least part of the air-discharge structure is encapsulated by the potting adhesive, such that the air-discharge structure are able to discharge air in the area of the accommodation space where the potting adhesive is positioned in the accommodation space.

Optionally, the air-discharge structure is configured to absorb the air in the accommodating space and discharging the absorbed air to the outside of the battery pack.

Optionally, a surface of the air-discharge structure is provided with an air hole, and the air hole is configured as an air passage or is configured to communicate with an air passage inside the air-discharge structure, so as to discharge the air in the area where the potting adhesive is positioned in the accommodating space through the air passage.

Optionally, the air-discharge structure includes at least one foam piece, and a plurality of air holes are provided on the foam piece, and the air holes are configured as air passages, and optionally, the foam piece is an porous foam piece.

Optionally, the air-discharge structure includes at least one tubular piece, and a tube wall of the tubular piece is provided with a plurality of air holes, and the air holes and the tubular piece are configured to communicate with a hollow portion of the air passage.

Optionally, the aperture of the air hole is 0.1 mm to 5 mm.

Optionally, the air-discharge structure is suitable for accumulating the air in the accommodation space above the battery module and suitable for discharging the accumulated air to the outside of the battery pack.

Optionally, the battery pack further includes an upper cover covering and provided at an upper end of the battery tray, and the air-discharge structure is suitable for discharging the accumulated air from the upper cover to the outside of the battery pack; and/or, the air-discharge structure is suitable for discharging the accumulated air to the outside of the battery pack through a gap between the upper cover and the battery tray.

Optionally, the air-discharge structure includes at least one first air-discharge piece, and the at least one first air-discharge piece is provided on the upper side of the battery module; at least part of the first air-discharge piece is encapsulated by the potting adhesive, such that the first air-discharge piece are able to discharge the air in the area where the potting adhesive is positioned in the accommodating space.

Optionally, a plurality of the first air-discharge pieces are provided and laid on the upper side of the battery module at equal intervals.

Optionally, the air-discharge structure further includes at least one second air-discharge piece, and at least part of the second air-discharge piece is encapsulated by the potting adhesive, such that the second air-discharge piece is able to discharge the air in the area where the potting adhesive is positioned in the accommodating space, and the at least one second air-discharge piece is provided on the upper side of the battery module, and a discharge passage of each second air-discharge piece is in communication with the discharge passages of a plurality of first air-discharge pieces.

Optionally, each first air-discharge piece extends along a first direction, and a plurality of first air-discharge pieces are arranged at intervals along a second direction, and the first direction intersects the second direction; the second air-discharge piece extends along the second direction, the number of the second air-discharge pieces is two, and two ends of the plurality of the first air-discharge pieces in the first direction are respectively connected with one second air-discharge piece.

Optionally, the air-discharge structure further includes a third air-discharge piece arranged in the accommodating space, and at least part of the third air-discharge piece is encapsulated by the potting adhesive, such that the third air-discharge piece are able to discharge the air in the area where the potting adhesive is positioned in the accommodating space, and a discharge passage of the third air-discharge piece is in communication with the discharge passage of the first air-discharge piece and/or the discharge passage of the second air-discharge piece.

Optionally, a lower end of the third air-discharge piece is adapted to be connected with a bottom plate of the battery tray.

Optionally, the lower end of the third air-discharge piece is adapted to communicate with an internal cavity of the bottom plate of the battery tray.

Optionally, the air-discharge structure is at least partially a compressible piece, and the compressible piece is able to absorb the air in the accommodating space and is able to discharge the absorbed air out of itself under the action of external pressure.

Optionally, two ends of the battery module in the first direction both have gaps with the inner side wall of the battery tray; a plurality of third air-discharge pieces are provided, and each gap has at least one third air-discharge piece.

Optionally, the first air-discharge piece is a strip-shaped piece; and/or, the second air-discharge piece is a strip-shaped piece; and/or; the third air-discharge piece is configured as a block-shaped piece.

Optionally, a volume of the third air-discharge piece is larger than that of a volume of the first air-discharge pieces; and/or, the volume of the third air-discharge piece is larger than the volume of each second air-discharge piece.

Optionally, the battery pack further includes an upper cover, and the upper cover is provided on the battery tray and adhered to the potting adhesive.

Optionally, the upper cover is provided with a plurality of air-discharge holes, and at least part of the air-discharge holes in the plurality of air-discharge holes are correspondingly provided and in communication with the discharge passage of the air-discharge structure.

According to a second aspect of the present invention, a vehicle is provided, including the battery pack described above.

According to a third aspect of the present invention, a method of assembling a battery pack is provided, including: providing a battery tray, an air-discharge structure, potting adhesive and a battery module, and the battery tray has an accommodating space; installing the battery module in the accommodating space; installing the air-discharge structure to the accommodating space; filling the potting adhesive in the accommodating space, and making the potting adhesive encapsulate the battery module, and making at least part of the air-discharge structure be encapsulated by the potting adhesive, such that the air-discharge structure is able to discharge the air in the area where the potting adhesive is positioned in the accommodating space.

Optionally, discharging the air in the accommodating space to the outside of the battery pack includes accumulating the air in the accommodating space above the battery module, and discharging the accumulated air to the outside of the battery pack.

Optionally, the method further includes providing an upper cover, and the upper cover covers and is provided at the upper end of the battery tray and adhered with the potting adhesive, and the upper cover is provided with an air-discharge hole; communicating the air-discharge hole with the discharge passage of the air-discharge structure after the upper cover covers and is provided at the battery tray.

Optionally, after the potting adhesive is cured, the air-discharge hole is sealed.

According to the above technical solution, the air-discharge structure is installed in the accommodating space, and because at least part of the air-discharge structure will be covered by the potting adhesive during the potting process of potting adhesive, the air-discharge structure can at least discharge the air in the area where the potting adhesive is positioned in the accommodating space, in other words, the air in the potting adhesive can be discharged, so that the probability of air-trapping areas in the potting adhesive in the accommodating space is reduced, and the potting adhesive can be filled in the accommodating space as much as possible and the reserved space for containing potting adhesive can be filled to the maximum extent, so as to improve the structural strength and rigidity of the battery pack, and further improve the overall mechanical properties of the battery pack.

Other features and advantages of the present invention will be described in detail in the following embodiments.

### BRIEF DESCRIPTION OF THE DRAWINGS

The accompanying drawings are provided to provide a further understanding of the present invention and constitute a part of the specification, and together with the following embodiments, serve to explain the present invention, but do not constitute a limitation of the present invention. In the attached drawings:
FIG. 1 is a schematic structural view of each component of a battery pack provided by an illustrative embodiment of the present invention in an exploded state, showing an upper cover with an air-discharge hole;
FIG. 2 is a schematic structural view of a battery pack provided by an illustrative embodiment of the present invention, with the upper cover and potting adhesive not shown;
FIG. 3 is a schematic structural top view of a top cover of the battery pack provided by an illustrative embodiment of the present invention;
FIG. 4 is a schematic structural view of a battery pack provided by an illustrative embodiment of the present invention, with an upper cover not covering and provided at a battery tray;
FIG. 5 is a structural schematic diagram of each component of a battery pack provided by an illustrative embodiment of the present invention in an assembled state, showing an upper cover without an air-discharge hole;
FIG. 6 is a structural schematic diagram of an air-discharge structure provided by an illustrative embodiment of the present invention, with the air-discharge structure including a first air-discharge piece, a second air-discharge piece and a third air-discharge piece;
FIG. 7 is a structural schematic diagram of an air-discharge structure including a tubular piece provided by an illustrative embodiment of the present invention, showing a part of the tubular piece;
FIG. 8 is a flow chart of a method for assembling a battery pack provided by an illustrative embodiment of the present invention.

### DETAILED DESCRIPTION

Hereinafter, specific embodiments of the present invention will be described in detail with reference to the accompanying drawings. It should be understood that the specific embodiments described here are only used to illustrate and explain the present invention, and are not used to limit the present invention.

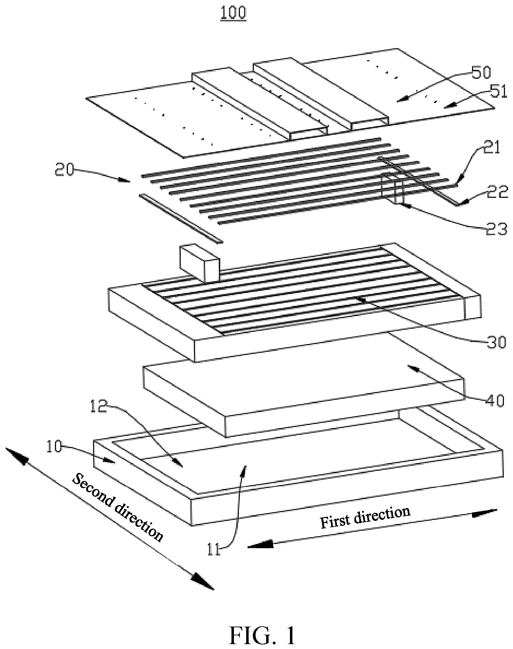

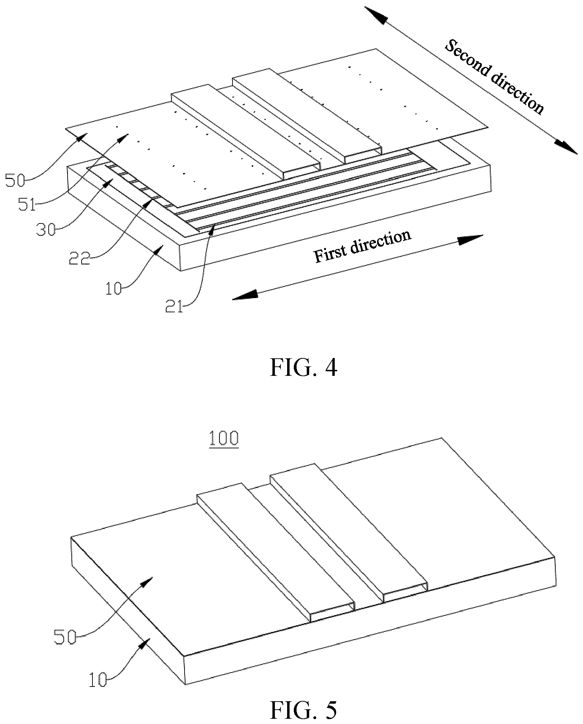

In the present disclosure, it should be understood that, unless otherwise stated, the orientation or positional relationship indicated by orientation words such as "up", "down", "inside" and "outside" is defined based on the drawing direction shown in the corresponding drawings, only for the convenience of describing the present invention and simplifying the description, and do not indicate or imply that the referred device or element must have a specific orientation and a specific orientation configuration and operation, so it cannot be understood as limitation to the present invention. The terms "inside and outside" can refer to the inside and outside of the corresponding structural profile. "First direction" and "second direction" can refer to the first direction and second direction shown in Figures 1 and 4. In addition, it should be noted that terms such as "first", "second" and "third" are used to distinguish one element from another, and they don't indicate sequence or importance. In addition, in the description with reference to the drawings, the same reference numerals in different drawings indicate the same elements.

In the description of the present disclosure, it should also be noted that unless otherwise specified and limited, the terms "provide", "connect", "interconnect" and "install" should be broadly understood, for example, they can be fixed connection, detachable connection or integrated connection; It can be directly connected or indirectly connected through an intermediary. For those skilled in the art, the specific meanings of the above terms in the present disclosure can be understood according to specific situations.

As mentioned above, in the related art, the mechanical properties of the battery pack are degraded, which can not meet the work requirements well. It is found by researchers that one of the reasons that lead to the low mechanical properties of battery packs in the related art is that: when the battery modules in the battery packs are encapsulated with potting adhesive, there will be air-trapping areas, and the air-trapping areas can not be filled with potting adhesive, which will lead to the decrease of structural strength and rigidity of the battery packs, thus leading to the decrease of mechanical properties.

As shown in FIGS. 1 to 7, the present invention provides a battery pack 100, including a battery tray 10, an air-discharge structure 20, potting adhesive 30 and a battery module 40, and the battery tray 10 has an accommodating space 11, the battery module 40 is installed in the accommodating space 11, at least part of the air-discharge structure 20 is positioned in the accommodating space 11, and the potting adhesive 30 is arranged in the accommodating space 11 and encapsulates the battery module 40, and at least part of the air-discharge structure 20 is covered with the potting adhesive 30, so that the air-discharge structure 20 can discharge the air in the area where the potting adhesive 30 is positioned in the accommodation space 11, so as to discharge the air in the accommodation space 11.

According to the above technical solution, the air-discharge structure 20 is installed in the accommodating space 11, and during the potting process of the potting adhesive 30, at least part of the air-discharge structure 20 will be covered by the potting adhesive 30, so that the air-discharge structure 20 can at least discharge the air in the area where the potting adhesive 30 is positioned in the accommodating space 11, that is, the air in the area where the potting adhesive 30 is positioned in the accommodating space 11 can be discharged from the potting adhesive 30, in other words, the air in the potting adhesive 30 can be discharged so as to reduce the probability of air-trapping areas in the potting adhesive 30 in the accommodating space 11, so that the potting adhesive 30 can be filled in the accommodating space 11 as much as possible, and the originally reserved space for accommodating the potting adhesive 30 can be filled to the maximum extent, thereby improving the structural strength and rigidity of the battery pack 100 and further improving the overall mechanical properties of the battery pack 100. Here, "air trapping" may refer to excess air remaining in the accommodating space 11 after the battery pack 100 is assembled.

In the present disclosure, when the potting adhesive 30 is filled into the accommodating space 11, because the filling speed of the potting adhesive 30 is relatively fast, if the air in the accommodating space 11 can't be discharged in time, it may accumulate to a position to cause air trapping, and the potting adhesive 30 can't be filled into the air-trapping areas, therefore the air-trapping areas will form a gap space inside the potting adhesive 30, resulting in some parts in the potting adhesive 30 being hollow, thus reducing the structural strength and rigidity of the potting adhesive 30.

Setting the air-discharge structure 20 in the accommodating space 11 can provide a temporary staying space for the air flowing in the accommodating space 11, that is, the air that is not discharged in time can be accumulated at the air-discharge structure 20 and then discharged, thus reducing the uncontrollable flowing direction and staying position of the air inside the accommodating space 11, reducing the situation that the inside of potting adhesive 30 has hollowness, which is beneficial to improving the rigidity of the potting adhesive 30, and further improving the structural strength and rigidity of the whole battery pack 100.

In some embodiments, the battery module 40 of the battery pack 100 may include a battery module composed of only battery cells, or a battery module composed of a plurality of battery cells and related electrical connection parts, or a battery module composed of a plurality of electrochemical cells.

In the present invention, the battery tray 10, as a load-bearing structure, can be made of an aluminum tailor-welded piece, a cast aluminum piece, a sheet metal stamped piece or an injection molded piece, etc., which is not limited in the present invention.

In the present invention, the air-discharge structure 20 can discharge the air in the accommodating space 11 to the outside of the battery pack 100 by any suitable solution of the battery pack 100, which is not limited in the present invention.

The present invention does not limit the principle of air discharge of the air-discharge structure 20. Optionally, in some embodiments of the present invention, the air-discharge structure 20 is used to absorb the air in the accommodating space 11 and discharge the absorbed air to the outside of the battery pack 100. The air-discharge structure 20 is used to absorb the air in the accommodation space 11 that cannot be discharged in time, and its air discharging effect is good, which can reduce the probability of air-trapping area and help prevent the potting adhesive 30 from being hollow when potting.

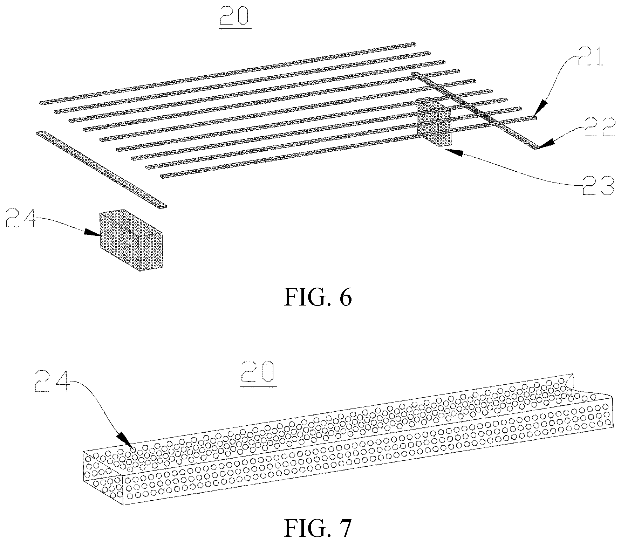

The specific structure of the air-discharge structure 20 is defined in the present invention. In some embodiments of the present invention, as shown in FIGS. 1 and 6, the surface of the air-discharge structure 20 is provided with an air hole 24, and the air hole 24 is configured as an air passage or is configured to communicate with an air passage inside the air-discharge structure 20. By providing the air hole 24, after the air-discharge structure 20 is installed in the accommodating space 11, the air hole 24 communicate with the accommodating space 11, and in the process of filling the accommodating space 11 with the potting adhesive 30, the air hole 24 can discharge the air in the area where the potting adhesive 30 is positioned in the accommodating space 11.

A plurality of air holes 24 can be provided, so as to better discharge the air in the accommodation space 11.

In some embodiments of the present invention, the air-discharge structure 20 may include at least one foam piece, and the foam piece may occupy less space, so that the potting adhesive 30 may occupy more space, and with foam structure itself provided with holes, that is, as a result, the foam piece itself has a plurality of air holes 24, which can be configured as an air passage and can omit the processing for air holes 24.

In addition, because the foam piece has a plurality of the air holes 24, it can play the role of air suction and air discharge, and the air hole is not easy to be blocked by selecting a foam type with reasonable diameter of the air hole. Moreover, since the foam piece can be compressed and has a light weight, it will not burden the battery pack 100 when it is installed in the battery pack 100.

In order to improve the discharge effect, optionally, the foam piece can be perforated foam, which has good air discharge effect and can better discharge the air in the accommodation space 11.

The at least one foam piece may include any one or more of a first air-discharge piece 21, a second air-discharge piece 22 and a third air-discharge piece 23 in the following description. Specifically, foam materials such as ethylene propylene diene monomer (EPDM), poly urethane (PU) or foamed silica gel can be selected, and the foam piece is soft and easy to compress, and at the same time have certain toughness, which is convenient for sticking to and assembling in the battery pack 100. And the size and shape of the foam piece is convenient to manufacture.

As for the specific structure of the air-discharge structure 20, in other embodiments of the present invention, as shown in FIG. 7, the air-discharge structure 20 includes at least one tubular piece, and the tube wall of the tubular piece is provided with a plurality of air holes 24, and the air holes 24 communicate with a hollow portion of the tubular piece configured as an air passage. With this design, the air in the accommodating space 11 can be guided and discharged through the communication between the plurality of air holes 24 and the air passage in the tubular piece.

A plurality of tubular pieces may be provided, for example, including any one or more of the first air-discharge piece 21, the second air-discharge piece 22 and the third air-discharge piece 23 in FIG. 1, that is, the first air-discharge piece 21, the second air-discharge piece 22 and the third air-discharge piece 23 constructed as foam pieces in FIG. 6 may also be replaced by porous tubular pieces.

The shape of the cross section of the tubular piece is not limited in the present invention, which can be any suitable shape such as a circle or a rectangle as shown in FIG. 7.

In the present invention, an aperture of the air hole 24 is not limited, which may be any suitable aperture. In order to ensure the air discharge effect and avoid the air hole 24 being blocked by the potting adhesive, the aperture of the air hole 24 can be 0.1 mm to 5mm, and preferably, the aperture of the air hole 24 can be 0.2mm to 2mm, that is, the aperture of the air hole 24 on the foam piece shown in FIG. 6 and the aperture of the air hole 24 on the tubular piece shown in FIG. 7 can both be 0.1 mm to 5mm, and preferably 0.2 mm to 2 mm.

Optionally, in some embodiments of the present invention, the air-discharge structure 20 can accumulate the air in the accommodation space 11 above the battery module 40, and is configured to discharge the accumulated air (that is, the air accumulated above the battery module 40, that is, the air accumulated in the upper space of the accommodation space 11) to the outside of the battery pack 100. As the potting adhesive 30 is filled from the lower part to the upper part of the accommodating space 11, the air in the accommodating space 11 will first accumulate above the battery module 40 and then be discharged, which is beneficial to the filling of the potting adhesive 30 and to avoid the problem of "air trapping" in the potting adhesive in the lower part of the accommodating space 11.

In the present invention, the battery pack 100 may further include an upper cover 50, which is provided at the upper end of the battery tray 10, and the air-discharge structure 20 may discharge the accumulated air from the upper cover 50 of the battery pack 100 (for example, the air-discharge hole 51 of the upper cover 50 described below) to the outside of the battery pack 100; and/or, the air-discharge structure 20 is configured to discharge the accumulated air to the outside of the battery pack 100 through a gap between the upper cover 50 and the battery tray 10 (for example, a gap where fasteners are installed). This ensures that air can be discharged from the battery pack 100.

In addition, in other embodiments of the present invention, the air-discharge structure 20 can accumulate the air in the accommodating space 11 above the battery module 40 and discharge the accumulated air from the battery tray 10, for example, from the upper part of the side wall of the battery tray 10.

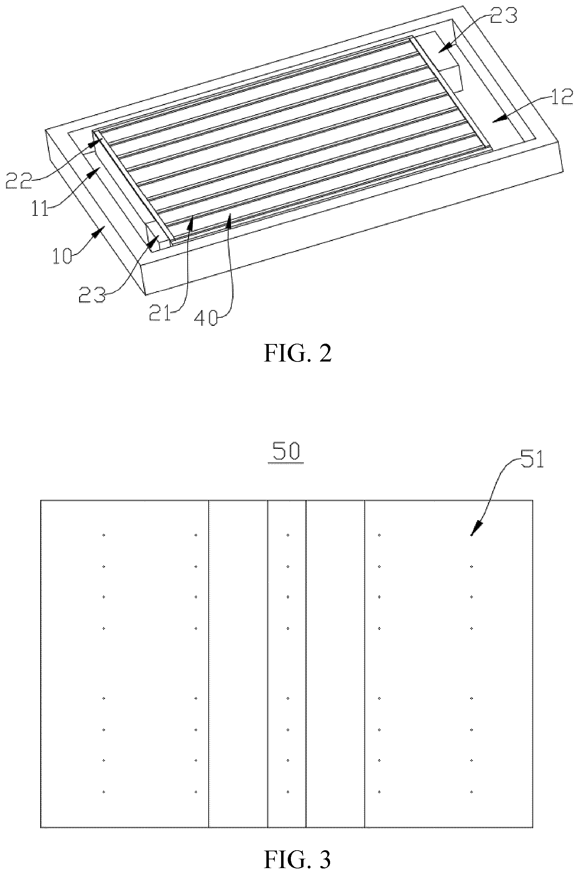

In the present invention, as shown in FIGS. 1 and 2, the air-discharge structure 20 may include at least one first air-discharge piece 21, and the at least one first air-discharge piece 21 is provided on the upper side of the battery module 40. For example, when the battery pack 100 is used in a vehicle, the first air-discharge piece 21 is provided on the side close to the body of the vehicle, and at least part of the first air-discharge piece 21 is encapsulated with potting adhesive 30, so that the first air-discharge piece 21 can discharge the air in the area where the potting adhesive 30 is positioned in the accommodating space 11, and the air discharged from the first air-discharge piece 21 can be discharged from the accommodating space 11 to the outside of the battery pack during the filling of the potting adhesive 30 or the foaming of the potting adhesive 30, for example, through the air-discharge hole 51 on the upper cover 50 mentioned below or the connection position between the upper cover 50 and the battery tray 10 of the battery pack 100. The first air-discharge piece 21 is provided on the upper side of the battery module 40, and it is ensure that there is at least one first air-discharge piece 21 at the upper side with a large area of the battery module 40, which is used to discharge the whole upper area of the battery module 40, so as to reduce the trapped air in this area.

It is provided on the upper side of the battery module 40 because there is a large space on the upper side of the battery module 40 that needs to be filled with the potting adhesive 30. If the potting adhesive 30 has a large area of hollow space in this space, the connection between the whole battery pack 100 and the upper parts (such as the upper cover or a bottom plate of electrical apparatus, etc.) will be unstable, causing the mechanical properties of the whole battery pack 100 to be reduced.

In the present invention, as shown in FIGS. 1 and 2, the number of the first air-discharge pieces 21 may be plural, and the plurality of first air-discharge pieces 21 may be laid on the upper side of the battery module 40 at equal intervals. With this arrangement, the air can be discharged uniformly, and the potting adhesive 30 can fill uniformly. In addition, the plurality of first air-discharge pieces 21 can improve the discharge ability of the air-discharge structure 20.

In the present invention, a gap may be formed between adjacent first air-discharge pieces 21, and the potting adhesive 30 is a fluid before curing, so the potting adhesive 30 can flow into the gap. When the first air-discharge pieces 21 are laid at equal intervals, the cured potting adhesive 30 can form a regular structure, so that the potting adhesive 30 is uniformly stressed, which is beneficial to enhancing the rigidity of the potting adhesive 30.

In the present invention, as shown in FIGS. 1 and 2, the air-discharge structure 20 may further include at least one second air-discharge piece 22, at least part of which is encapsulated by the potting adhesive 30, so that the second air-discharge piece 22 can discharge the air in the area where the potting adhesive 30 is positioned in the accommodating space 11, and the at least one second air-discharge piece 22 is provided on the upper side of the battery module 40, and the discharge passage of each second air-discharge piece 22 is in communication with the discharge passages of a plurality of first air-discharge pieces 21. The second air-discharge piece 22 is in communication with the first air-discharge piece 21, so that a connected discharge passage can be constructed to guide the air, and the air in the air-discharge structure 20 can be easily discharged out of the battery pack 100. As the second air-discharge piece 22 is also provided, that is, plural air-discharge pieces are provided, the reliability of absorbing air and discharging air out of the battery pack 100 is further ensured, and the reliability of the discharge function of the air-discharge structure 20 is further ensured.

The discharge passage refers to the passage through which air can pass in the air-discharge structure 20. For example, when the air-discharge structure 20 is provided as the foam piece as described above, the discharge passage may be the passage formed by a plurality of communicating air holes 24 in the foam piece.

The air discharged from the second air-discharge piece 22 can not only be discharged through the first air-discharge piece 21, but also be discharged from the accommodating space 1 to the outside of the battery pack during the filling process of the potting adhesive 30 or the foaming process of the potting adhesive 30, for example, through the air-discharge hole 51 on the upper cover 50 mentioned below or the connection position between the upper cover 50 and the battery tray 10 of the battery pack 100.

The second air-discharge piece 22 can be provided to be able to absorb the air in the accommodation space 11, and can discharge the absorbed air from itself under the external pressure (for example, under the extrusion of the potting adhesive 30 or under the extrusion of the cover 50). For example, the second air-discharge piece 22 may be the foam piece as described above.

In the present invention, as shown in FIGS. 1 to 3, each first air-discharge piece 21 can extend along a first direction, and a plurality of first air-discharge pieces 21 are arranged at intervals (for example, at equal intervals) along a second direction, and the first direction intersects with the second direction, and the second air-discharge pieces 22 extend along the second direction, and the number of second air-discharge pieces 22 is two, and two ends of the plurality of first air-discharge pieces 21 along the first direction are respectively connected with one second air-discharge piece 22. In this way, the discharge range of the first air-discharge piece 21 and the second air-discharge piece 22 can cover the upper side of the whole battery module 40 as much as possible, and the air trapping on the upper side of the battery module 40 can be effectively prevented.

As shown in FIG. 1 and FIG. 2, gaps are formed between two adjacent first air-discharge pieces 21 and between the first air-discharge piece 21 and the second air-discharge piece 22, which can accommodate the potting adhesive 30. When the potting adhesive 30 is filled in the gap, the air in the gap can be moved to the air-discharge structure 20, so that the potting adhesive 30 in the gap can be ensured not to be hollow. Moreover, when the first air-discharge piece 21 and the second air-discharge piece 22 are set as foam pieces as described below, the potting adhesive 30 can squeeze the volumes of the first discharge member 21 and the second discharge member 22, thereby increasing the filling volume of the potting adhesive 30 and improving the performance of the potting adhesive 30.

In some embodiments, the first direction may be the direction of cell stacking, or the first direction may be perpendicular to the direction of cell stacking (as shown in FIG. 1), and the second direction may be perpendicular to the first direction, which is not limited in the present invention, as long as the first direction and the second direction intersect and the first air-discharge piece 21 and the second air-discharge piece 22 communicate with each other.

In the present invention, as shown in FIGS. 1 and 2, the air-discharge structure 20 may further include a third air-discharge piece 23, and the third air-discharge piece 23 is arranged in the accommodation space 11, and at least part of the third air-discharge piece 23 is encapsulated with the potting adhesive 30, so that the third air-discharge piece 23 can discharge the air in the area where the potting adhesive 30 is positioned in the accommodation space 11, that is, the height of the lower end of the third air-discharge piece 23 may be lower than the first air-discharge piece 21 and/or the second air-discharge piece 22, and the discharge passage of the third air-discharge piece 23 communicates with the discharge passage of the first air-discharge piece 21 and/or the discharge passage of the second air-discharge piece 22, so that the air in the interior of the accommodation space 11 can be discharged.

Optionally, the lower end of the third air-discharge piece 23 is adapted to be connected to the bottom plate 12 of the battery tray 10. In this way, the air in the accommodation space 11 near the bottom of the battery tray 10 (that is, the lower part of the accommodation space 11) can be discharged, and the air in the area near the bottom of the accommodation space 11 can be accumulated by providing the third air-discharge piece 23, so as to prevent the air at this position from flowing to other parts and affecting the filling of the potting adhesive 30.

As the third air-discharge piece 23 is also provided, the arrangement of the plurality of air-discharge pieces further ensures the reliability of absorbing air and discharging the air to the outside of the battery pack 100, thereby ensuring the reliability of the discharge function of the air-discharge structure 20.

Because the third air-discharge piece 23 is in communication with the discharge passage of the first air-discharge piece 21 and/or the discharge passage of the second air-discharge piece 22, when the air in the third air-discharge piece 23 is not discharged in time, the air can be discharged through the first air-discharge piece 21 and the second air-discharge piece 22, which is beneficial to prevent the trapped air from being formed due to the deep depth of the accommodation space 11.

When the depth of the accommodation space 11 is deep, if the air-discharge structure 20 is made as the foam piece as described above, the interior of the foam piece can be made of suitable foam piece with loose internal holes, so as to prevent the air-discharge structure 20 from not discharging in time due to the depth of the accommodation space 11.

The air discharged from the third air-discharge piece 23 can be discharged not only through the first air-discharge piece 21 and the second air-discharge piece 22, but also through the accommodating space 11 to the outside of the battery pack during the filling process of the potting adhesive 30 or the foaming process of the potting adhesive 30, for example, through the air-discharge hole 51 on the upper cover 50 mentioned below or the connection position between the upper cover 50 and the battery tray 10 of the battery pack 100.

Optionally, the lower end of the third air-discharge piece 23 is adapted to communicate with the internal cavity of the bottom plate 12 of the battery tray 10. In this way, the air in the accommodation space 11 can be discharged to the internal cavity of the bottom plate 12 through the third air-discharge piece 23, and then the air in the internal space of the bottom plate 12 can be discharged to the outside of the battery pack according to actual situation. For example, a discharge passage and a discharge valve can be provided, and the discharge valve communicates with the internal cavity of the bottom plate 12 through the discharge passage to discharge the air in the internal cavity.

The internal cavity may be defined, for example, between the heat exchange plate and the bottom guard plate of the bottom plate 12.

In the present invention, the air-discharge structure 20 is at least partially a compressible piece, such as a foam. The compressible piece is provided to be able to absorb the air in the accommodation space 11, and to discharge the absorbed air from itself under the external pressure (for example, under the extrusion of the potting adhesive 30). In this embodiment, when the compressible piece is in an uncompressed state, the air in the accommodating space 11 can be absorbed by the compressible piece, and when the accommodating space 11 is filled with potting adhesive 30 or the battery tray 10 is covered with the upper cover 50, the air absorbed by the compressible piece can be discharged from the compressible piece under external pressure, and the air discharged can be discharged to the outside of the battery pack through, for example, the air-discharge hole 51 on the upper cover 50 or other discharge passages.

In the embodiment where the air-discharge structure 20 includes the above-mentioned first air-discharge piece 21, the first air-discharge piece 21 is configured as a compressible piece, such as the above-mentioned foam piece, and the first air-discharge piece 21 can be provided to absorb the air in the accommodation space 11 and discharge the absorbed air from itself under the external pressure (for example, under the extrusion of the potting adhesive 30 or under the extrusion of the cover 50). For example, the first air-discharge piece 21 may be the above-mentioned foam piece.

In the embodiment where the air-discharge structure 20 includes the above-mentioned second air-discharge piece 22, the second air-discharge piece 22 is configured as a compressible piece, such as the above-mentioned foam piece, and the second air-discharge piece 22 can be provided to absorb the air in the accommodation space 11 and discharge the absorbed air from itself under the external pressure (for example, under the extrusion of the potting adhesive 30 or under the extrusion of the cover 50).

In the embodiment where the air-discharge structure 20 includes the above-mentioned third air-discharge piece 23, the third air-discharge piece 23 is configured as a compressible piece, such as the above-mentioned foam piece, and the third air-discharge piece 23 can be provided to absorb the air in the accommodation space 11 and discharge the absorbed air from itself under the external pressure (for example, under the extrusion of the potting adhesive 30).

In the present invention, as shown in FIGS. 1 and 2, two ends of the battery module 40 along the first direction have gaps with the inner side wall of the battery tray 10, and the number of the third air-discharge pieces 23 may be plural, and at least one third air-discharge piece 23 is provided in each gap. With this arrangement, the air in the accommodation space 11 can be ensured to be discharged nearby, which can further reduce the risk of air trapping in the accommodation space 11.

As shown in FIG. 1 and FIG. 2, in an alternative arrangement in which the battery module 40 is positioned in the battery tray, the battery module 40 is installed near the middle of the accommodating space 11, and there will be spaces at two ends of the battery module 40 (or around the battery module 40). When the potting adhesive 30 is filled, no matter from which space or from several spaces at the same time, air in several spaces need to be discharged due to the fluidity of the potting adhesive 30. Therefore, the number of the third air-discharge pieces 23 may be plural, and the third air-discharge pieces 23 are arranged in each of the gaps, so that at least one third air-discharge piece 23 exists in each larger space as much as possible, thereby ensuring the air discharge in the accommodating space 11.

When two third air-discharge pieces 23 are provided, as shown in FIG. 2, the two third air-discharge pieces 23 can be arranged at two ends of the battery module 40 in a single direction and at two ends of the second direction, so that the symmetry of the potting adhesive 30 can be ensured, and the stress of the potting adhesive 30 after its curing can be ensured to be uniform.

In the present invention, as shown in FIG. 2, the first air-discharge piece 21 may be a strip-shaped piece extending in a first direction, for example, and/or the second air-discharge piece 22 may be a strip-shaped piece extending in a second direction, for example, and/or the third air-discharge piece 23 may be configured as a block-shaped piece. This arrangement is convenient for the arrangement of the above three pieces, and also convenient for the technological manufacture of the first air-discharge piece 21 and the second air-discharge piece 22.

Because the first air-discharge piece 21 and the second air-discharge piece 22 are provided on the upper side of the battery module 40, the thickness of them can be set to be small, but because the third air-discharge piece 23 is connected to the bottom of the battery tray 10 to meet the depth of the accommodation space 11, the third air-discharge piece 23 is set in a block shape, which is convenient to meet the depth requirement, and the block shape is large and convenient to accumulate air.

In some embodiments, the first air-discharge piece 21 and the second air-discharge piece 22 can be arranged in a circular strip shape, so that the contact surfaces between the first air-discharge piece 21 and the upper surface of the battery module 40 and between the second air-discharge piece 22 and the upper surface of the battery module 40 are small, so that more contact space can be reserved for the potting adhesive 30 and the upper surface of the battery pack 100, and the circular discharge passage is larger, so that the discharge can be completed better.

In some embodiments, the first air-discharge piece 21 and the second air-discharge piece 22 can be provided in a square strip shape, so that the first air-discharge piece 21 and the second air-discharge piece 22 can be in plane contact with the upper side of the battery module 40 and can be conveniently installed on the upper side of the battery module 40.

The present invention does not limit the volume relationship of the first air-discharge piece 21, the second air-discharge piece 22 and the third air-discharge piece 23. Optionally, the volume of the third air-discharge piece 23 may be greater than that of each first air-discharge piece 21, and/or the volume of the third air-discharge piece 23 may be greater than that of each second air-discharge piece 22. With this arrangement, it can be ensured that the third air-discharge piece 23 has a large space for storing air.

In the present invention, the first air-discharge piece 21 positioned on the farthest side among a plurality of first air-discharge pieces 21 arranged at intervals in the second direction can be considered to be positioned at the side wall of the battery tray 10 in the second direction, so as to discharge the air in the accommodating space 11 from the part of the battery tray 10 close to the side wall.

In the present invention, as shown in FIGS. 1 and 4, the battery pack 100 may further include an upper cover 50, and the upper cover 50 is provided to be covered on the battery tray 10 and bonded with the potting adhesive 30.

In the present invention, as shown in FIGS. 1 and 4, in order to facilitate the discharge of the air-discharge structure 20, the upper cover 50 is provided with a plurality of air-discharge holes 51, and at least some of the plurality of air-discharge holes 51 are correspondingly arranged and in communication with the discharge passage of the air-discharge structure 20. In this way, after the air-discharge structure 20 accumulates air, the air-discharge holes 51 can discharge the air in the air-discharge structure 20, thereby increasing the discharge speed of the air-discharge structure 20 and facilitating the discharge of the air in the accommodation space 11.

In the present invention, the specific shape of the air-discharge hole 51 is not limited, and may be a circular hole or a square hole penetrating the upper cover 50. When the air-discharge hole 51 is a circular hole, the diameter of air-discharge hole can be set to 1 mm to 5 mm. When the diameter of the air-discharge holes 51 is smaller, the number of the corresponding air-discharge holes 51 can be appropriately increased to ensure the discharge efficiency of the air-discharge structure 20.

In some embodiments, the air-discharge holes 51 can be uniformly provided on the upper cover 50 along the first direction, and can be arranged corresponding to the air-discharge structure 20, and the air-discharge holes 51 are arranged corresponding to the middle position of the first air-discharge piece 21 and the second air-discharge piece 22, so that the air-discharge holes 51 can communicate with the air-discharge structure 20 to the greatest extent and ensure the discharge efficiency, so as to avoid that the air-discharge hole 51 is not connected with the air-discharge structure 20 due to assembly deviation, and avoid that the discharge effect is affected.

According to a second aspect of the present invention, there is provided a vehicle including a battery pack 100.

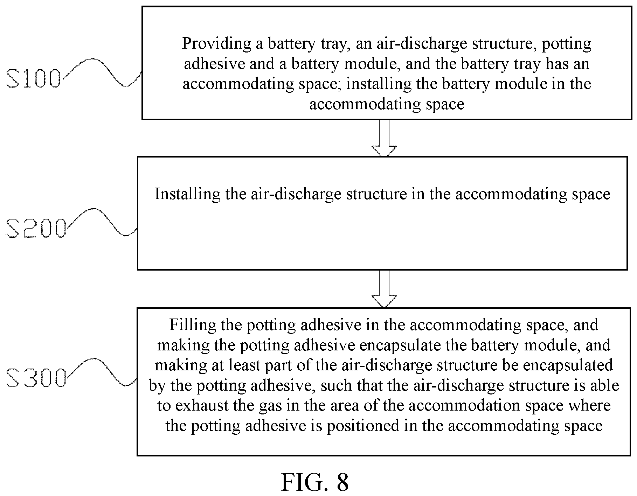

According to a third aspect of the present invention, as shown in FIG. 8, there is provided a method of assembling a battery pack 100, which includes the following steps.

At S100, a battery tray 10, an air-discharge structure 20, a potting adhesive 30 and a battery module 40 are provided, and the battery tray 10 has an accommodating space 11, and the battery module 40 is installed in the accommodating space 11;

At S200, the air-discharge structure 20 is installed in the accommodation space 11;

At S300, the potting adhesive 30 is filled in the accommodating space 11, and the potting adhesive 30 encapsulates the battery module 40, and at least part of the air-discharge structure 20 is encapsulated with the potting adhesive 30, so that the air-discharge structure 20 can discharge the air in the area where the potting adhesive 30 is positioned in the accommodating space 11.

As mentioned above, through the above technical solution, the air-discharge structure 20 is installed in the accommodating space 11, so that when the potting adhesive 30 is potting, the air in the accommodating space 11 can be discharged out through the air-discharge structure 20 to reduce the trapped air in the accommodating space 11, so that the potting adhesive 30 can be fully filled in the accommodating space 11 as much as possible, and the originally reserved space for accommodating the potting adhesive 30 can be filled to the maximum extent, thereby improving the structural strength and rigidity of the battery pack 100, and further improving the overall mechanical performance of the battery pack 100. Moreover, the potting adhesive 30 can connect the internal structural components of the battery pack 100 (such as the air-discharge structure 20 and the battery module 40) with the high-strength structures such as the battery tray 10 and the upper cover 50 into a whole, further enhancing the structural strength and rigidity of the battery pack 100.

In the present invention, discharging the air in the accommodating space 11 to the outside of the battery pack 100 may include accumulating the air in the accommodating space 11 above the battery module 40 and discharging the accumulated air to the outside of the battery pack 100. As mentioned above, in this way, the accumulated air (that is, the air accumulated above the battery module 40, that is, the air accumulated in the upper space of the accommodating space 11) can be discharged to the outside of the battery pack 100. As the potting adhesive 30 is filled from the lower part to the upper part, the air in the accommodating space 11 will first accumulate above the battery module 40 and then be discharged, which is beneficial to the filling of the potting adhesive 30 and to avoid the problem of "air trapping" in the potting adhesive in the lower part of the accommodating space 11.

In the present invention, the above method of assembling the battery pack may further include the following steps.

An upper cover 50 is provided, which is provided to be covered on the upper end of the battery tray 10 and adhered to the potting adhesive 30, and the upper cover 50 is provided with an air-discharge hole 51, and after the upper cover 50 is covered on the battery tray 10, the air-discharge hole 51 communicates with the discharge passage of the air-discharge structure 20. In this way, after the air-discharge structure 20 accumulates air, the air-discharge holes 51 can discharge the air in the air-discharge structure 20, thereby increasing the discharge speed of the air-discharge structure 20, facilitating the discharge of the air in the accommodation space 11 and preventing the air from accumulating in the accommodation space 11.

In some embodiments, the upper cover 50 may be made of a metal plate, a liquid-cooled plate or a composite material, which is not limited by the present invention.

In the present invention, after the potting adhesive 30 is cured, the air-discharge hole 51 will be sealed to ensure the airtightness of the whole battery pack 100. For example, sealant can be applied or a sealant tape can be attached to the air-discharge hole 51.

## Claims

1. A battery pack (100), comprising a battery tray (10), an air-discharge structure (20), a potting adhesive (30) and a battery module (40);
wherein the battery tray (10) has an accommodating space (11), and the battery module (40) is installed in the accommodating space (11);
the potting adhesive (30) is provided in the accommodating space (11) and encapsulates the battery module (40); and
at least part of the air-discharge structure (20) is in the accommodation space, and at least part of the air-discharge structure (20) is encapsulated by the potting adhesive (30), such that the air-discharge structure (20) is able to discharge air in the area of the accommodation space (11) where the potting adhesive (30) is positioned in the accommodation space.

2. The battery pack (100) according to claim 1, wherein the air-discharge structure (20) is configured to absorb the air in the accommodating space (11) and is configured to discharge the absorbed air to the outside of the battery pack (100).

3. The battery pack (100) according to claim 1, wherein the surface of the air-discharge structure (20) is provided with an air hole (24), and the air hole (24) is configured as an air passage or is in communication with an air passage inside the air-discharge structure, so as to discharge the air in the area of the accommodation space (11) where the potting adhesive (30) is positioned in the accommodating space (11) through the air passage.

4. The battery pack (100) according to claim 3, wherein the air-discharge structure (20) comprises at least one foam piece, and a plurality of air holes (24) are provided on the foam piece, and the air holes (24) are configured as air passages, and optionally, the foam piece is a porous foam piece.

5. The battery pack (100) according to claim 3, wherein the air-discharge structure (20) comprises at least one tubular piece, wherein a tube wall of the tubular piece is provided with a plurality of air holes (24), and the air holes (24) and the tubular piece are configured to communicate with a hollow portion of the air passage.

6. The battery pack (100) according to any one of claims 1-5, wherein the air-discharge structure (20) is configured to accumulate the air in the accommodation space above the battery module (40) and discharge the accumulated air to the outside of the battery pack (100);
optionally, the battery pack (100) further comprises an upper cover (50), which is provided to cover an upper end of the battery tray (10), and the air-discharge structure (20) is configured to discharge the accumulated air from the upper cover (50) to the outside of the battery pack (100); and/or,
the air-discharge structure (20) is configured to discharge the accumulated air to the outside of the battery pack (100) through a gap between the upper cover (50) and the battery tray (10).

7. The battery pack (100) according to any one of claims 1-5, wherein the air-discharge structure (20) comprises at least one first air-discharge piece (21), and the at least one first air-discharge piece (21) is provided on the upper side of the battery module (40); and
at least part of the first air-discharge piece (21) is encapsulated by the potting adhesive (30), such that the first air-discharge piece (21) is able to discharge the air in the area of the accommodation space where the potting adhesive (30) is positioned in the accommodating space (11);
optionally, a plurality of the first air-discharge pieces (21) are provided on the upper side of the battery module (40) at equal intervals.

8. The battery pack (100) according to claim 7, wherein the air-discharge structure (20) further comprises at least one second air-discharge piece (22), and at least part of the second air-discharge piece (22) is encapsulated by the potting adhesive (30), such that the second air-discharge piece (22) is able to discharge the air in the area of the accommodation space where the potting adhesive (30) is positioned in the accommodating space (11), and the at least one second air-discharge piece (22) is provided on the upper side of the battery module (40), and a discharge passage of each second air-discharge piece (22) is in communication with the discharge passages of a plurality of first air-discharge pieces (21);
optionally, each first air-discharge piece (21) extends along a first direction, and the plurality of first air-discharge pieces (21) are arranged at intervals along a second direction, wherein the first direction intersects the second direction; and
the second air-discharge piece (22) extends along the second direction, the number of the second air-discharge pieces (22) is two, and two ends of the plurality of the first air-discharge pieces (21) in the first direction are respectively connected with one second air-discharge piece (22).

9. The battery pack (100) according to claim 8, wherein the air-discharge structure (20) further comprises a third air-discharge piece (23) arranged in the accommodating space (11), and at least part of the third air-discharge piece (23) is encapsulated by the potting adhesive (30), such that the third air-discharge piece (23) is able to discharge the air in the area of the accommodation space where the potting adhesive (30) is positioned in the accommodating space (11),
wherein a discharge passage of the third air-discharge piece (23) is in communication with the discharge passage of the first air-discharge piece (21) and/or the discharge passage of the second air-discharge piece (22);
optionally, a lower end of the third air-discharge piece (23) is configured to be connected with a bottom plate (12) of the battery tray (10);
optionally, the lower end of the third air-discharge piece (23) is configured to communicate with an internal cavity of the bottom plate (12) of the battery tray (10).

10. The battery pack (100) according to any one of claims 1 to 9, wherein the air-discharge structure (20) is at least partially a compressible piece, and the compressible piece is able to absorb the air in the accommodating space (11) and is able to discharge the absorbed air out of itself under the action of external pressure.

11. The battery pack (100) according to claim 9, wherein two ends of the battery module (40) in the first direction both have gaps with the inner side wall of the battery tray (10); and a plurality of third air-discharge pieces (23) are provided, and each gap has at least one third air-discharge piece (23);
optionally, the first air-discharge piece (21) is a strip-shaped piece; and/or,
the second air-discharge piece (22) is a strip-shaped piece; and/or;
the third air-discharge piece (23) is configured as a block-shaped piece.

12. The battery pack (100) according to claim 9, wherein a volume of the third air-discharge piece (23) is larger than a volume of each first air-discharge piece (21); and/or,
the volume of the third air-discharge piece (23) is larger than a volume of each second air-discharge piece (22).

13. The battery pack (100) according to any one of claims 1-5, wherein the battery pack (100) further comprises an upper cover (50), and the upper cover (50) is provided to be covered on the battery tray (10) and adhered to the potting adhesive (30);
optionally, the upper cover (50) is provided with a plurality of air-discharge holes (51), and at least part of the air-discharge holes (51) in the plurality of air-discharge holes (51) are correspondingly provided and in communication with the discharge passage of the air-discharge structure (20).

14. A vehicle comprising the battery pack (100) according to any one of claims 1 to 13.

15. A method of assembling a battery pack (100), comprising:
providing a battery tray (10), an air-discharge structure (20), potting adhesive (30) and a battery module (40), wherein the battery tray (10) has an accommodating space (11);
installing the battery module (40) in the accommodating space (11);
installing the air-discharge structure (20) in the accommodating space (11); and
filling the potting adhesive (30) in the accommodating space (11), and making the potting adhesive (30) encapsulate the battery module (40), and making at least part of the air-discharge structure (20) be encapsulated by the potting adhesive (30), such that the air-discharge structure (20) is able to discharge the air in the area of the accommodation space where the potting adhesive (30) is positioned in the accommodating space (11).
